# EUROPÄISCHE PATENTSCHRIFT

(11) **EP 2 676 310 B1**
(45) Veröffentlichungstag und Bekanntmachung des Hinweises auf die Patenterteilung: **26.07.2017**
(21) Anmeldenummer: 12709008.2
(22) Anmeldetag: 10.02.2012
(51) Int. Cl.: H01M 2/14, H01M 4/38, H01M 4/62, H01M 4/66, H01M 4/80, H01M 2/40, H01M 4/136, H01M 10/05, H01M 10/052, H01M 10/0585, H01M 10/36, H01M 10/0566, H01M 10/39, H01M 12/08

(54) **METALL-SCHWEFEL-BATTERIESYSTEM**
METAL-SULPHUR BATTERY SYSTEM
SYSTÈME DE BATTERIE MÉTAL-SOUFRE

(30) Priorität: 19.02.2011 DE 102011011797; 20.10.2011 DE 102011120959
(43) Veröffentlichungstag der Anmeldung: 25.12.2013
(73) Patentinhaber: Volkswagen Aktiengesellschaft, 38436 Wolfsburg (DE)
(72) Erfinder: SCHEFFLER, Rouven, 30177 Hannover (DE); WINTER, Martin, 48149 Münster (DE); PASSERINI, Stefano, 48149 Münster (DE); SPEIDEL, Angela-Kristina, 29525 Uelzen (DE); GRÖGER, Oliver, 38102 Braunschweig (DE)
(86) Internationale Anmeldenummer: PCT/EP2012/000609
(87) Internationale Veröffentlichungsnummer: WO 2012/110219

(56) Entgegenhaltungen:
- US-A1- 2005 175 894
- US-A1- 2007 221 265
- US-A1- 2010 104 948
- US-B1- 6 797 428

## Beschreibung

Die Erfindung betrifft ein Metall-Schwefel-Batteriesystem, insbesondere ein sekundäres Metall-Schwefel-Batteriesystem, gemäß dem Oberbegriff des Anspruchs 1.

Neben Blei-Akkumulatoren werden als sekundäre Batterien (das heißt wieder aufladbare Batterien) insbesondere Lithium-Ionen-Batterien (Li-Ionen-Batterien) und Nickel-Metallhydrid-Batterien (Ni-MH-Batterien) für die Fahrzeugtraktion und für weitere mobile Stromversorgungen (insbesondere für Elektrogeräte wie Laptops, Handys etc.) verwendet. Die Energiedichte dieser Systeme weist eine systembedingte Limitierung auf (derzeitige Li-Ionen-Batterien: circa 180 Wh/kg; Ni-MH-Batterien: circa 80 Wh/kg). Beim Einsatz im Kraftfahrzeug bleibt die mit diesen Systemen erreichbare Reichweite derzeit meist noch unterhalb von 100 km. Selbst für den Fall, dass die theoretisch mögliche Energiedichte dieser Systeme erzielt werden könnte, würde deren Reichweite immer noch nicht die von Fahrzeugen mit Verbrennungsmotoren erreichen können. Lithium-Ionen-Batterien eignen sich daher eher für den Kurzstreckenbetrieb, etwa in reinen Stadtfahrzeugen, oder aber in Hybridsystemen in Kombination mit einem herkömmlichen Verbrennungsmotor oder einer Brennstoffzelle. Langfristig müssen daher alternative Batteriesysteme entwickelt werden, die eine wesentlich höhere Reichweite ermöglichen.

Ein mögliches System ist die Metall-Schwefel-Batterie, insbesondere die Lithium-Schwefel-Batterie. Eine Lithium-Schwefel-Batterie hat eine deutlich höhere theoretische spezifische Energiedichte von 2450 Wh/kg bei einer praktisch erreichbaren Zellspannung von 2,1 V.

Bei bekannten Lithium-Schwefel-Batterien (Li-Schwefel-Batterien, Li-S-Batterien) werden im Allgemeinen Schwefelelektroden bestehend aus Schwefelpulver, Kohlenstoff (z.B. acetylen black) und einem Binder verwendet. Als bekannte Binder werden synthetische Polymere wie z.B. Polyvinylidenfluorid (PVDF) oder natürliche Polymere wie Gelatine oder Cellulose eingesetzt (siehe W. Wang, Y. Wang, Y. Huang et al, J. Appl. Electrochem. 40, 321-325 (2010) und Y.-J. Choi, Y-D. Chung, C.-Y. Beak et al., J. Power Sources 184, 548-552 (2008)). Zur Herstellung bekannter Schwefel-Kathoden für Lithium-Schwefel-Batterien wird eine Mischung dieser Bestandteile auf einen Stromabnehmer aus Aluminium (z.B. in Gestalt einer Aluminiumfolie mit einer Dicke zischen 10 µm und 50 µm) aufgetragen.

In bekannten Lithium-Schwefel-Batterien kommt als Elektrolyt eine Mischung organischer Lösungsmittel aus z.B. Dimethoxyethan (DME), Dioxolan (DOL), Triethylenglycoldimethylether (TEGDME) und organischen Carbonaten (z.B. Dimethylcarbonat, Diethylcarbonat, Ethylmethylcarbonat und Ethylencarbonat) mit einem Lithium-Leitsalz (beispielsweise Lithium-Triflat, Lithium-TFSI, Lithiumhexafluorophosphat LiPF₆, Lithiumperchlorat LiClO₄) zum Einsatz.

Als Material der Lithium-Anode wird bei bekannten Li-S-Batterien Lithium pur, legiert und/oder in Mischung (Interkalation), insbesondere mit Kohlenstoff und/oder Silizium verwendet, das auf einen Anodenableiter als Sammelelektrode aufgebracht wird. Als Anodenableiter eignet sich insbesondere Kupfer als Trägermaterial, da dieses nicht nur ein elektrisch sehr gut leitendes Element, sondern auch stabil gegenüber Lithium ist.

Die ablaufende elektrochemische Zellreaktion in einer Lithium-Schwefel-Batterie lautet für die Zellentladung

Li+S → Li₂S

Allerdings verläuft die Reaktion - wie in der folgenden Gleichung dargestellt - über eine Vielzahl von Zwischenschritten unter Bildung von verschiedenen Polysulfiden:

2Li + Sₓ ⇔ Li₂Sₓ

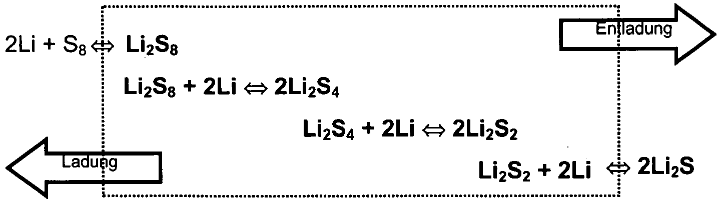

Die gebildeten Lithium-Polysulfide sind in den Elektrolyten löslich, wodurch eine zumindest partielle Lösung der Polysulfidanionen während des Entladevorgangs stattfindet. Während des Entladens verteilen sich die gelösten Polysulfidanionen somit über den gesamten Elektrolyten der Batterie. Während des Ladevorgangs scheidet sich der Schwefel vorrangig im Bereich des Stromabnehmers der Schwefel-Kathode ab, wodurch der innen liegende Teil der SchwefelElektrode nicht mehr vollständig mit Schwefel beladen wird. Zusätzlich ist auch eine Reaktion der Polysulfidanionen mit dem Lithiummetall an der Anode möglich. Somit geht aktives Material verloren, wodurch innerhalb weniger Zyklen ein hoher Kapazitätsverlust der Zelle resultiert. Zusätzlich verursacht die Diffusion der Polysulfidanionen durch den Elektrolyten und die direkte Reaktion mit der Lithiummetallanode eine hohe Selbstentladung.

Es wurden verschiedene Ansätze verfolgt, die oben genannten Probleme zu beseitigen. Ein Ansatz ist die Verwendung von Kohlefaser-Nanoröhrchen auf der Kathode, in denen sowohl der Schwefel als auch die Polysulfide eingeschlossen sind und sich somit nicht in dem Elektrolyten lösen können (vergleiche S-C. Han, M.-S. Song, H. Lee, H.-S. Kim, H.J. Ahn, J.Y. Lee J. Electrochem. Soc. 150, A889 (2003)). Gemäß US 2005/0175894 A1 und WO 2001/39302 A1 kann die Lithium-Anode durch einen selektiven Lithium-Ionenleiter geschützt werden. Hierbei wird die Lithium-Anode durch ein dünnes, Lithium-Ionen leitendes Glas abgeschirmt. Für den praktischen Einsatz einer sekundären Litihium-Schwefel-Zelle sind die mechanischen Eigenschaften dieser Gläser kritisch, da die Lade-/Entladevorgänge eine Oberflächenänderung der Lithiumelektrode bewirken: diese mechanische Beanspruchung könnte zum Bruch der schützenden Glasschicht führen.

Es besteht daher weiterhin die Aufgabe, den Kapazitätsverlust von Metall-Schwefel-Batterien beim Ladevorgang möglichst weitgehend zu verringern. Es besteht ferner die Aufgabe, dem Kapazitätsverlust einer Metall-Schwefel-Batterie beim Ladevorgang mit möglichst einfachen, kostengünstigen und im praktischen Einsatz robusten Mitteln zu begegnen.

Die Aufgabe wird bei einer Metall-Schwefel-Batterie, insbesondere bei einer sekundären Lithium-Schwefel-Batterie, nach dem Oberbegriff des Anspruchs 1 dadurch gelöst, dass der Separator mindestens dreischichtig aufgebaut ist. Der Separator enthält eine mittlere Schicht, die einen flüssigen und/oder gelartigen Elektrolyt enthält. Zwischen dieser mittleren Schicht und der Anode einerseits und der Kathode andererseits befindet sich je mindestens eine Festelektrolytschicht.

Als flüssiger Elektrolyt können beispielsweise Mischungen organischer Lösungsmittel aus z.B. Dimethoxyethan (DME), Dioxolan (DOL), Triethylenglycoldimethylether (TEGDME) und organischen Carbonaten (z.B. Dimethylcarbonat, Diethylcarbonat, Ethylmethylcarbonat und Ethylencarbonat) mit einem Metall-Leitsalz (beispielsweise bei Lithium als Metall wären dies z.B. Lithium-Triflat, Lithium-TFSI, Lithiumhexafluorophosphat LiPF₆, Lithiumperchlorat LiClO₄) zum Einsatz kommen. Der Elektrolyt sollte dabei bevorzugt eine hohe Ionen-Leitfähigkeit für die Ionen des Metalls in der Größenordnung von 10⁻⁴ S/cm oder besser bei 25°C, wünschenswert im Bereich von 10⁻³ S/cm oder besser bei 25°C aufweisen. Die mittlere Schicht des Separators kann insbesondere eine poröse Keramik und/oder ein poröses Polymer (z.B. Polyethylen oder Polypropylen) oder auch eine Kombination aus beiden Stofftypen sein, die mit dem flüssigen Elektrolyten getränkt ist. Kommerzielle Beispiele für derartige poröse Materialien für die mittlere Schicht des Separators sind die Separatoren der Firma Celgard und der Separator Separion der Firma Evonik. Auch der Einsatz eines Gel-Elektrolyten, insbesondere eines Gel-Polymerelektrolyten, ist möglich, z. B. eines Copolymers aus Polyvinylidenfluorid (PVDF) und Hexafluropropylen (HFP), das mit einem Flüssigelektrolyten (z. B. ein organisches Lösungsmittel und Metall-Leitsalz wie oben angegeben) aufgequollen ist.

Die Anode wird gegenüber dem flüssigen und/oder gelartigen Elektrolyt durch eine Festelektrolytschicht, insbesondere durch einen Festpolymerelektrolyten, abgedeckt, um einen internen Kurzschluss der Zelle durch Metalldendriten-Wachstum zu unterbinden. Für diese Festelektrolytschicht sind bevorzugt verschiedene Polymere möglich, z. B. Polyethylenoxid (PEO), kationische Polymere mit quaternisierten Stickstoffatomen sowie Blockcopolymere und Multiblockpolymere verschiedenster Monomereinheiten. Die Polymere werden bevorzugt mit einem Metall-Leitsatz wie oben angegeben versetzt.

Die Aufgabe wird ferner bei einer Metall-Schwefel-Batterie, insbesondere einer sekundären Lithium-Schwefel-Batterie, nach dem Oberbegriff des Anspruchs 1 dadurch gelöst, dass der Separator alternativ oder zusätzlich mindestens zweischichtig aufgebaut ist mit einer der Kathode zugewandten, Anionen blockierenden Schicht, die eine Ionen-Leitfähigkeit für die Ionen des Metalls hat, die mindestens 100-fach höher ist als die Ionen-Leitfähigkeit für ein Sₘ²⁻-Ion aus der Gruppe m = 2 bis 8, und einer für zumindest die Ionen des Metalls durchlässigen Polymerelektrolytschicht, die der Anode zugewandt ist. Der Separator hat eine Dicke von mindestens 10 µm. Die Polymerelektrolytschicht ist dicker als die der Kathode zugewandte, Anionen blockierende Schicht und weist eine Ionen-Leitfähigkeit für die Ionen des Metalls von mindestens 10⁻⁴ S/cm bei 25°C auf, bevorzugt mindestens 10⁻³ S/cm bei 25°C.

Durch den Einsatz einer Anionen blockierenden Membran wird eine Diffusion von Polysulfidanionen in den Elektrolyten und zur Metallanode unterdrückt. Die Anionen blockierende Membran sollte eine hohe Sperrwirkung gegenüber Polysulfidanionen aufweisen. Für die Anionen blockierende Membran können verschiedene Polymerarten verwendet werden. Zum einen sind beispielsweise anionische Polymere zu nennen, z. B. Polybenzylsulfonate, Nafion, Polyacrylsäure (mit einem Metall-Leitsalz), Malonsäure-Vinylether-Copolymer (mit einem Metall-Leitsalz). Als zweite Gruppe sind z. B. überoxidierte Polymere zu nennen, wie beispielsweise Polythiophene (und deren Substitutionsderivate), Polypyrrole und Polyaniline. Die Dicke der Anionen-sperrenden Schicht wird bevorzugt sehr dünn ausgeführt, insbesondere kleiner oder gleich 5 µm.

Sowohl im Falle des mindestens dreischichtigen Separators als auch im Falle des mindestens zweischichtigen Separators wird bevorzugt, dass der Separator eine Dicke zwischen 10 µm und 100 µm, insbesondere zwischen 13 µm und 60 µm hat. Eine Schichtdicke in diesem Bereich hat sich bei Versuchen als guter Kompromiss zwischen einer möglichst hohen Ionen-Leitfähigkeit für die Ionen des Metalls einerseits, die eine geringe Schichtdicke erfordert, und der notwendigen mechanischen Stabilität des Separators, die eine höhere Schichtdicke erfordert, erwiesen.

Das erfindungsgemäße Metall-Schwefel-Batteriesystem kann mit bekannten Schwefelkathoden verwendet werden, die beispielsweise - wie eingangs geschildert - aus Schwefelpulver, Kohlenstoff (z.B. acetylen black) und einem Binder bestehen. Als Binder werden in den bekannten Schwefelelektroden synthetische Polymere wie z. B. Polyvinylidenfluorid (PVDF) oder natürliche Polymere wie Gelatine und/oder Cellulose eingesetzt. Zur Herstellung der bekannten Schwefelkathoden wird eine Mischung dieser Bestandteile auf einen Stromabnehmer (z. B. aus Aluminium in Gestalt einer Aluminiumfolie mit einer Dicke zwischen 10 µm und 50 µm) aufgetragen.

Besonders bevorzugt wird aber, als Kathode für das neuartige Metall-Schwefel-Batteriesystem eine flüssige Schwefelelektrode oder eine verflüssigte Schwefelelektrode einzusetzen. Grundsätzlich sind flüssige oder verflüssigte Schwefelelektroden als solche im Stand der Technik bekannt, siehe beispielsweise US 4,833,048 B1 oder CA 2,050,886 A1. Bei einer flüssigen Schwefelelektrode liegt die Betriebstemperatur der Zelle, zumindest aber der Schwefelelektrode höher als der Schmelzpunkt von Schwefel (115,21 °C). Um die Betriebstemperatur der Zelle zu senken, können auch schwefelorganische Verbindungen als Kathodenmaterialien verwendet werden.

Bei einer verflüssigten Schwefelelektrode werden die Polysulfide in einem Lösungsmittel gelöst. Als Lösungsmittel kommen insbesondere konventionelle Lösungsmittel wie z. B. Triethylenglycoldimethylether (TEGMDE), Tetrahydrofuran (THF), Dimethoxyethan (DME), Dioxolan (DOL), zyklische und aliphatische Ether sowie organische Carbonate (z. B. Dimethylcarbonat, Diethylcarbonat, Ethylmethylcarbonat und Ethylencarbonat) als auch im Besonderen ionische Flüssigkeiten (RTILs, room temperature ionic liquids) in Frage. Die Energie wird hierbei in den Polysulfiden mit hoher Oxidationszahl (insbesondere Li₂S₈) gespeichert, die z. B. in einer porösen Kohlenstoffmatrix in der Schwefelkathode der Zelle oder auch außerhalb des Schichtaufbaus in einem Reservoir untergebracht werden können. Beispielsweise kann das Metall-Schwefel-Batteriesystem außerhalb der Zelle ein Reservoir in Gestalt eines Tanks aufweisen, der mit einem Elektrolyt gefüllte ist, in dem der Schwefel gelöst ist, und der mit der Kathode und/oder dem Separator verbunden oder verbindbar ist, so dass der Elektrolyt zwischen Reservoir einerseits und Kathode und/oder Separator andererseits austauschbar ist. Besonders bevorzugt wird dabei, dass der Elektrolyt mittels einer aktiven Umwälzung, z. B. mittels einer Pumpe, zwischen dem Reservoir einerseits und der Kathode und/oder dem Separator andererseits umwälzbar ist.

Eine andere Möglichkeit der Bereitstellung einer verflüssigten Schwefelkathode stellt eine Dispersion aus Schwefel und/oder Schwefel plus Kohlenstoff und/oder Schwefel-Kohlenstoff-Kompositen und/oder aus anderweitig elektrisch leitfähig gemachten Schwefelpartikeln in einer Flüssigkeit dar. Die dispergierten schwefelhaltigen Partikel besitzen bevorzugt Durchmesser im Nanometer- und/oder Mikrometer-Bereich.

Bei Speicherung der aktiven Polysulfidanionen außerhalb des Schichtaufbaus, insbesondere außerhalb der Metall-Schwefel-Zelle, ist die Schaffung eines sehr leistungsfähigen Metall-Schwefel-Batteriesystems bei - gegenüber dem Zustand ohne Speicherreservoir - verringertem Gewicht möglich. Bei geringeren Leistungsanforderungen ist es oftmals ausreichend, kathodenseitig einen offenporigen, insbesondere elektrisch leitfähigen Füllkörper (beispielsweise die bereits erwähnte poröse Kohlenstoffmatrix) vorzusehen, in dessen Poren der flüssige oder verflüssigte Schwefel der Kathode vorliegt. In jedem Falle führt die Verwendung einer flüssigen oder verflüssigten Schwefelelektrode zu einer deutlichen Verbesserung der Redox-Reaktionskinetik und damit zu höheren Leistungsdichten des Metall-Schwefel-Batteriesystems.

Das erfindungsgemäße Metall-Schwefel-Batteriesystem wird im Folgenden anhand mehrerer Ausführungsbeispiele eines Lithium-Schwefel-Batteriesystems näher erläutert. Die Erfindung ist aber nicht auf Lithium-Schwefel-Batterien beschränkt. Grundsätzlich kann als Metall für die Metallanode mindestens eines aus der Gruppe Lithium, Natrium, Magnesium, Calcium, Aluminium und Zink eingesetzt werden. In Versuchen haben sich auch Legierungen dieser Metalle untereinander oder mit anderen Elementen bewährt, beispielsweise Lithium-AluminiumLegierung, Lithium-Silizium-Legierung und Lithium-Zinn-Legierung.

In der Zeichnung zeigen die Figuren
Figur 1: ein erstes Ausführungsbeispiel einer Lithium-Schwefel-Batteriezelle in schematischer Darstellung mit einem mindestens dreischichtig aufgebauten Separator,
Figur 2: ein zweites Ausführungsbeispiel einer Lithium-Schwefel-Batteriezelle in schematischer Darstellung mit einem mindestens zweischichtig aufgebauten Separator,
Figur 3: ein drittes Ausführungsbeispiel einer Lithium-Schwefel-Batterie,
Figur 4: ein viertes Ausführungsbeispiel eines Lithium-Schwefel-Batteriesystems in schematischer Darstellung mit einem außerhalb des Schichtaufbaus vorgesehenen Reservoir.

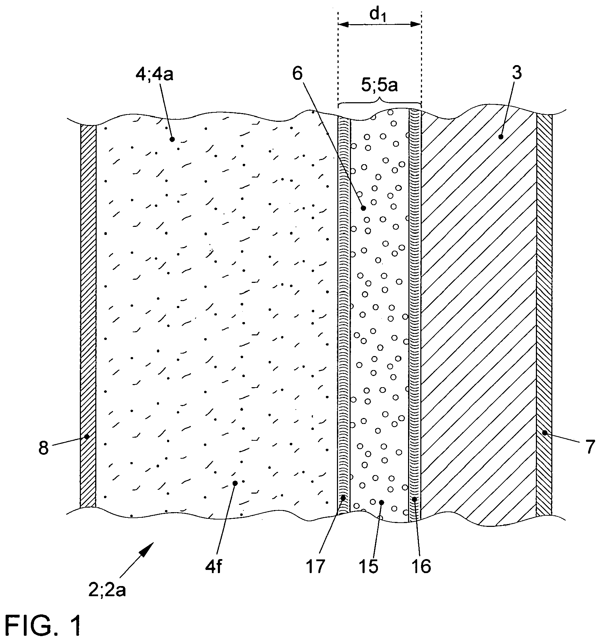

Figur 1 zeigt in schematischer Darstellung den Schichtaufbau eines ersten Ausführungsbeispiels einer erfindungsgemäßen Metall-Schwefel-Zelle 2 in Gestalt einer Lithium-Schwefel-Zelle 2a. Die Lithium-Schwefel-Zelle 2a besitzt einen Kathodenableiter 8 aus Kupfer, einen Anodenableiter 7 aus Aluminium und eine Metallanode 3 aus Lithium (Li). Die Schwefel-Kathode 4 ist als verflüssigte Schwefelkathode 4a ausgeführt, bei der Schwefel in Dimethoxyethan (DME) gelöst ist. Die Schwefellösung füllt die Poren einer porösen Kohlenstoffmatrix 4f, die die Kathodenstruktur der Lithium-Schwefel-Batteriezelle 2a ausbildet.

Die Schwefelkathode 4a und die Lithiumanode 3 sind durch einen Separator 5 getrennt, der bei diesem Ausführungsbeispiel der Figur 1 dreischichtig aufgebaut ist. Der dreischichtig aufgebaute Separator 5a des erstens Ausführungsbeispiels der Figur 1 umfasst eine mittlere Schicht 15 sowie jeweils eine Festelektrolytschicht 16 und 17 zwischen der mittleren Schicht 15 und der Anode 3 einerseits und der Kathode 4a andererseits. Die mittlere Schicht 15 besteht aus dem Separator Separion der Firma Evonik, der mit einem Elektrolyten 6 getränkt ist. Der flüssige Elektrolyt 6 besteht aus dem organischen Carbonat Diethylcarbonat versetzt mit dem Lithium-Leitsalz Lithiumperchlorat LiClO₄. Die Festelektrolytschichten 16 und 17 bestehen aus mit Lithiumperchlorat LiClO₄ versetzten Polyethylenoxid (PEO). Der Separator 5a hat eine Gesamtschichtdicke d₁ von 50 µm.

Die Lithium-Schwefel-Batteriezelle 2a der Figur 1 wird zu ihrer Herstellung bevorzugt im ungeladenen Zustand zusammengesetzt. Dazu wird in der Kathode Li₂S vorgelegt, die Anode besteht zunächst nur aus dem blanken Anodenableiter aus Kupfer. Bei der ersten Ladung der Lithium-Schwefel-Batteriezelle 2a wird das Li₂S in Polysulfide mit hoher Oxydationstufe (insbesondere Li₂S₈) umgesetzt, während sich Lithium Li auf dem Anoden-Stromableiter 7 aus Kupfer abscheidet. In den nachfolgenden Lade-Entlade-Zyklen muss vermieden werden, dass sich unlöslicher Schwefel bildet, so dass die Zellreaktion

L₂S₈ + 14 Li⁺ +14e⁻ ←→ 8 Li₂S

resultiert. Somit verringert sich die theoretische spezifische Energie auf ca. 2000 Wh/kg. Im Gegenzug wird die Faustregel, das als spezifische Energie in der Regel nur ca. 30% der theoretisch aus den aktiven Materialien erwarteten Werte erzielbar ist, umgangen.

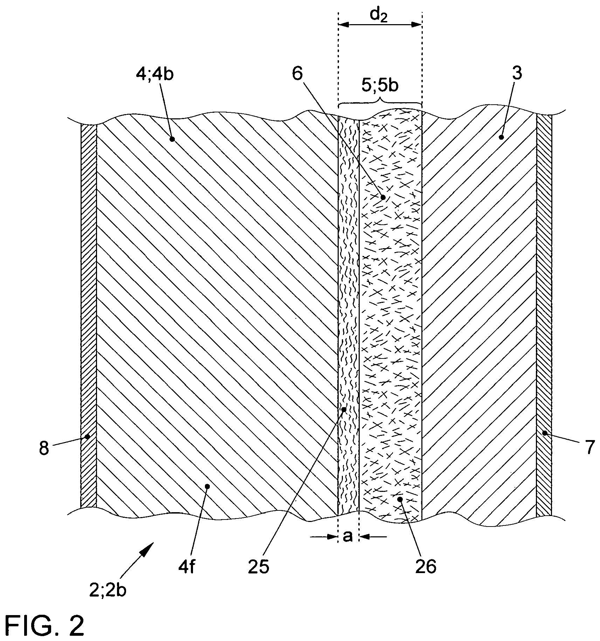

In der Figur 2 ist ein zweites Auswirkungsbeispiel eines erfindungsgemäßen Metall-Schwefel-Batteriesystems schematisch dargestellt. Es handelt sich ebenfalls um eine Lithium-Schwefel-Batteriezelle 2b. Im Folgenden wird lediglich noch auf die Unterschiede zur Lithium-Schwefel-Batteriezelle 2a gemäß der Figur 1 eingegangen.

Bei der auf Schwefel basierenden Kathode 4 des zweiten Ausführungsbeispiels der Figur 2 handelt es sich um eine Feststoff-Schwefelkathode 4b. Die Feststoff-Schwefelkathode 4b besteht aus einer Mischung aus Schwefelpulver, acetylen black und dem Polymer Polyvinylidenfluorid (PVDF) als Bindemittel. Zur Herstellung der Feststoff-Schwefelkathode 4b wird diese Mischung auf den Kathodenableiter 8 aufgestrichen. Bei dem Kathodenableiter 8 handelt es sich in diesem Ausführungsbeispiel um eine Aluminiumfolie mit einer Dicke d₂ von 40 µm.

Der Separator 5 der Figur 2 zeigt einen zweischichtigen Aufbau. Der zweischichtig aufgebaute Separator 5b dieses Ausführungsbeispiels umfasst eine der Kathode 4b zugewandte, Aniönen blockierende Schicht 25 aus einer Nafion-Membran. Diese Nafion-Membran ist mit einer Schichtdicke von nur 2 µm sehr dünn ausgeführt und wird daher durch eine 30 µm dicke Polymerelektrolytschicht 26 aus mit Lithiumhexafluorophosphat LiPF₆ versetztem Polyethylenoxyd (PEO) mechanisch gestützt.

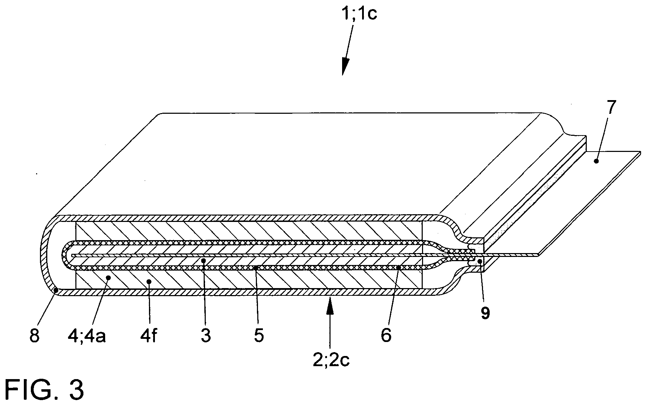

In Figur 3 ist ein drittes Ausführungsbeispiel eines erfindungsgemäßen Metall-Schwefel-Batteriesystems 1 in Gestalt eines Lithium-Schwefel-Batteriesystems 1c dargestellt. Das Ausführungsbeispiel der Figur 3 entspricht hinsichtlich seiner Funktionsweise weitgehend dem ersten Ausführungsbeispiel der Figur 1. Seine Funktionsweise wird anhand seines Herstellungsprozesses näher erläutert.

Als Anodenableiter 7 wird im Ausführungsbeispiel der Figur 3 eine Kupferfolie mit einer Dicke von 25 µm verwendet, die auf die Außenabmessungen 65 mm x 50 mm zugeschnitten ist.

Die Lithium-Anode 3 der Lithium-Schwefel-Batteriezelle 2c des dritten Ausführungsbeispiels besteht aus einer 50 µm dicken Lithiumfolie, die handelsüblich erhältlich ist und üblicherweise für herkömmliche Lithium-Ionen-Batterien verwendet wird. Die Außenabmessungen der Lithiumfolie betrugen 50 mm x 100 mm, diese wurde allerdings um den Kupfer-Anodenableiter 7 auf ein Außenmaß von 50 mm x 50 mm einmal herum gefaltet. Auf diese Art und Weise blieb ein Streifen der Kupferfolie mit einer Breite von 15 mm unbedeckt.

Anschließend wurde in mehreren Herstellungsschritten eine Separator-Elektrolyt-Folie 5 mit einem Mehrschichtaufbau wie folgt hergestellt:
- Als mechanisch stützende Polymerelektrolytschicht 26 wurde eine 25 µm dicke Folie aus einem herkömmlichen porösen Separator für Lithium-Ionen-Batterien, nämlich dem Separator Separion der Firma Evonik, verwendet.
- Die mechanisch widerstandsfähige Separionfolie wurde auf einer Seite in einem Gießverfahren mit einer Schichtlage Nafion beschichtet, um die Anionen-Leitfähigkeit durch die Multischicht-Elektrolyt-Folienschicht deutlich zu reduzieren. Das Gießverfahren wurde unter Nutzung einer kommerziell erhältlichen Nafionionomerlösung durchgeführt. Nach dem Aufgießen wurde das Lösungsmittel verdampft, und die Zweischicht-Folie (Separion + Nafion) wurde bei 165°C 90 Minuten lang getrocknet. Die Gesamtschichtdicke des getrockneten Schichtaufbaus betrug anschließend 40 µm. Die Zweischicht-Folie wurde anschließend in eine konzentrierte Lösung von Lithiumnitrat bei Siedetemperatur eingetaucht, um die Natrium-Kationen durch Lithium-Kationen zu ersetzen. Der Zweischicht-Film wurde anschließend bei 120°C in Vakuum getrocknet.
- Die Zweischicht-Folie wurde anschließend auf der der Nafion-Schicht entgegen gesetzten Seite mit einer Lösung aus Polyethylenoxid (PEO) und Benzophenon (BP) in Acetonitril beschichtet. Das Gewichtsverhältnis der beiden Bestandteile PEO und BP betrug PEO : BP = 95 : 5. Die aufgebrachte PEO+BP-Schicht, die nach dem Verdampfen des Acetonitrils 15 µm dick war, wurde ultravioletter Strahlung ausgesetzt, um eine Polymer-Vernetzung hervorzurufen.
- Die Dreischicht-Folie wurde anschließend bei 100°C im Vakuum mehrere Stunden lang getrocknet und danach in eine 1:5-molare Mischung aus Lithium-bis(trifluoromethansulfonyl)imid (LiTFSI) and N-butyl-N-methylpyrrolidiniumbis(trifluoromethansulfonyl)imid (PYR₁₄TFSI) getaucht, um einerseits den ternären Elektrolyten PEO-LiTFSI-PYR₁₄ TFSI zu bilden und andererseits die Poren der mittleren Separion-Schicht mit dem Ionen-leitfähigen LiTFSI-PYR₁₄TFSI-Gemisch zu füllen.

Die derart hergestellte Separator-Elektrolyt-Folie 5, deren Außenabmessungen 60 mm x 110 mm betrugen, wurde vollständig um die Lithium-Anoden-Folie 3 herumgefaltet (vergleiche Fig. 3), und zwar so, dass die PEO+BP-Seite der Separator-Elektrolyt-Folie 5 zur Lithium-Metall-Anode 3 wies. Die über die Lithium-Metall-Anode 3 überstehende Separator-Elektrolyt-Folie 5 wurde auf beiden Seiten mit sich selbst und den Kupferfolien-Anodenableiter 7 heißverklebt, so dass die Lithium-Metall-Anode 3 von der Separator-Elektrolyt-Multischichtfolie 5 umhüllt war.

Im nächsten Herstellungsschritt wurden zwei 200 µm dicke, poröse Kohlenstoff-Vliese mit Außenabmessungen von jeweils 50 mm x 50 mm auf beiden Seiten des bisher gebildeten Schichtaufbaus angeordnet, um als Kathodenstromsammler zu fungieren. Die offenporigen Kohlenstoff-Vliese hatten ein Feststoffphasenvolumen von etwa 10 % ihres Gesamtvolumens, um einen Durchfluss einer Polysulfidanionen enthaltenden Lösung zu erlauben.

Der so gebildete Schichtaufbau wurde in eine 100 µm dicke vorgeformte Nickelfolie eingewickelt, die einerseits als Gehäusematerial der Lithium-Schwefel-Batteriezelle 2c diente und andererseits als Kathodenableiter 8 arbeitete. Ein Kurzschluss zwischen diesem Nickel-Zellengehäuse und dem Kupfer-Anodenableiter 7 wurde durch eine dazwischen angeordnete, elektrisch isolierende Dichtung 9 aus Heißklebematerial verhindert. Das Nickelfolien-Zellgehäuse wurde an seinen beiden Schmalseiten offen gelassen, um den Durchfluss einer Polysulfid-Anionen enthaltenden Lösung zu ermöglichen.

Schließlich wurde das Zellgehäuse der Lithium-Schwefel-Zelle 2c in ein Becherglas getaucht, in dem eine Polysulfid-Lösung enthalten war, um die kathodische Redox-Reaktion in Gang zu setzen. Die Polysulfid-Lösung bestand aus einer Lösung von Li₂Sₓ (8 ≥X ≥2) in einem Gemisch aus PYR₁₄TFSI (≥90 wt.%) und Propylencarbonat (< 10 wt.%).

Die Lithium-Schwefel-Batteriezelle 2c der Fig. 3 weist somit folgende Bauelemente auf:
- einen Kathodenableiter 8 aus einer 100 µm dicken Nickelfolie, die gleichzeitig ein Gehäuse für die Batteriezelle 2c ausbildet;
- eine Kathode 4a mit verflüssigtem Schwefel, bestehend aus einer Polysulfid-Lösung Li₂Sₓ (8 ≥X ≥2) gelöst in einem Gemisch aus PYR₁₄TFSI und Propylencarbonat, wobei die Polysulfid-Lösung die Poren eines 200 µm dicken Kohlenstoff-Vlieses ausfüllt, welches das Strukturgerüst der Schwefelkathode 4 ausbildet;
- einen dreischichtig aufgebauten Separator 5, dessen drei Schichten folgenden Aufbau aufweisen:
   ∘ eine mittlere Schicht aus einer mechanisch stützenden, 25 µm dicken, porösen Separion-Folie, deren Poren mit einem Ionen-leitfähigen LiTFSI-PYR₁₄TFSI-Gemisch als Elektrolyt 6 gefüllt sind,
   ∘ eine der Schwefelkathode 4, 4a zugewandte, 15 µm dicke Nafionschicht, deren Natrium-Kationen durch Lithium-Kationen ersetzt wurden; diese Schicht bildet eine Anionen zumindest weitgehend blockierende Schicht, die aber für die Metall-Kationen weitgehend durchlässig ist,
   ∘ eine der Lithium-Metallanode 3 zugewandte, 15 µm dicke Schicht aus vernetztem Polyethylenoxid (PEO) und Benzophenol (BP), die unter Bildung des ternären Elektrolyten PEO-LiTFSI₄-PYR₁₄ TFSI mit einer Mischung aus Lithium-bis(trifluoromethansulfonyl)imid (LiTFSI) und N-butyl-N-methylpyrrolidiniumbis(trifluoromethansulfonyl)imid (PYR₁₄TFSI) getränkt ist,
- eine Metallanode 3 aus einer 50 µm dicken Lithiumfolie
- und schließlich eine 25 µm dicken Kupferfolie als Anodenableiter.

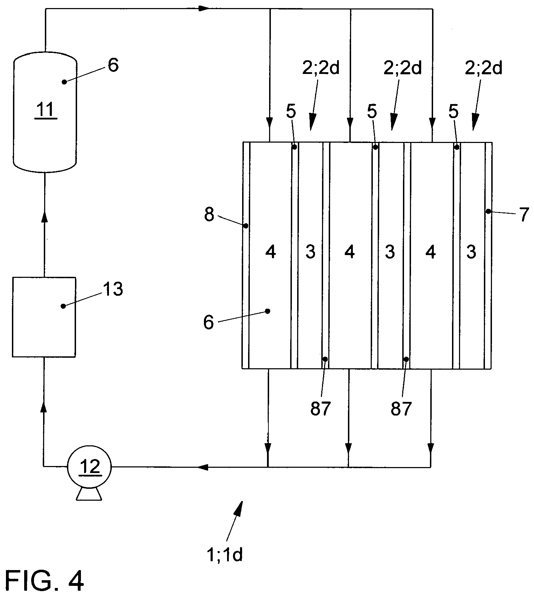

In Fig. 4 ist ein viertes Ausführungsbeispiel eines erfindungsgemäßen Metall-Schwefel-Batteriesystems 1 d schematisch dargestellt. Das dargestellte Lithium-Schwefel-Batteriesystem 1 d umfasst drei Lithium-Schwefel-Batteriezellen 2d, die zur Spannungserhöhung in Serie geschaltet sind. Das dargestellte Lithium-Schwefel-Batteriesystem 1 d umfasst demgemäß drei Anoden 3, drei Kathoden 4 und drei die Anoden und die Kathoden jeweils voneinander trennende Separatoren 5. Die drei Lithium-Schwefel-Batteriezellen 2d sind durch zwei Bipolarplatten 87 in Serie zusammengeschaltet und an ihren Enden mit einem Anodenableiter 7 und einem Kathodenableiter 8 zum Abgriff ihrer addierten Spannungen versehen.

Das Batteriesystem 1 d enthält kathodenseitig einen flüssigen Elektrolyten 6, der mittels einer aktiven Umwälzung umwälzbar ist. Dazu ist die Kathode 4 der Lithium-Schwefel-Batteriezellen 2d als offenporiger, elektrisch leitfähiger Füllkörper in Gestalt einer Kohlenstoffmatrix ausgebildet, in dessen Poren der Elektrolyt und die gelösten Polysulfide vorliegen. Die Kathodenräume 4 der Lithium-Schwefel-Batteriezellen 2d sind Teil eines Leitungssystems, das den Elektrolyten 6 zwischen den Kathodenräumen 4 und einem Reservoir 11 umwälzen kann. Zum aktiven Betreiben der Umwälzung ist in das Leitungssystem eine Pumpe 12 integriert. Außerdem kann die Temperatur des umgewälzten Elektrolyten 6 mittels einer in das Leitungssystem eingefügten Temperiereinheit 13 gesteuert werden.

Durch eine Anordnung gemäß Fig. 4 kann in dieser Fortbildung eines erfindungsgemäßen Metall-Schwefel-Batteriesystems 1 d Energie in Form von Polysulfiden mit hoher Oxydationszahl (insbesondere Li₂S₈) in dem externen Reservoir 11 gespeichert werden. Es wird damit eine Methode zur Verfügung gestellt, eine Batterie mit hoher Energiespeicherkapazität zur Verfügung zu stellen, ohne dass es dazu großer Metall-Schwefel-Batteriezellen 2 bedarf. Es muss lediglich ein entsprechendes Reservoir 11, z. B. in Form eines außerhalb der Batteriezelle 2d angeordneten Tank-Reservoirs 11, vorgesehen werden. Ein solches Tank-Reservoir 11 ist wesentlich kostengünstiger, kompakter und gewichtsmäßig leichter herzustellen und vorzusehen als eine vergrößerte Metall-Schwefel-Batteriezelle 2 selbst. Die geringen zusätzlichen Aufwendungen in Form des Reservoirs 11, einer bevorzugten Umwälzpumpe 12 sowie des benötigten Leitungssystems werden durch die eingesparten Kosten und das eingesparte Gewicht und Volumen bei den Batteriezellen 2d deutlich überkompensiert.

### Bezugszeichenliste

- 1: Metall-Schwefel-Batteriesystem
- 1c, 1d: Lithium-Schwefel-Batteriesystem
- 2: Metall-Schwefel-Batteriezelle
- 2a, 2b, 2c, 2d: Lithium-Schwefel-Batteriezelle
- 3: auf Metall basierende Anode, insbesondere Lithium-Anode
- 4: auf Schwefel basierende Kathode
- 4a: Kathode mit verflüssigtem Schwefel
- 4b: Feststoff-Schwefel-Kathode
- 4f: offenporiger Füllkörper, insbesondere offenporige Kohlenstoff-Matrix
- 5: Separator
- 5a: Separator mit mindestens dreischichtigem Aufbau
- 5b: Separator mit mindestens zweischichtigem Aufbau
- 6: Elektrolyt
- 7: Anodenableiter, insbesondere Kupfer-Anodenableiter
- 8: Kathodenableiter
- 9: Dichtung
- 11: Reservoir
- 12: Pumpe
- 13: Temperiereinheit
- 15: mittlere Schicht
- 16, 17: Festelektrolytschicht
- 25: Anionen blockierende Schicht
- 26: Polymerelektrolytschicht

## Patentansprüche

1. Metall-Schwefel-Batteriesystem (1, 1 c, 1 d) mit mindestens
einer elektrochemischen Metall-Schwefel-Zelle (2, 2b, 2c, 2d), aufweisend einen Schichtaufbau aus
einer auf einem Metall basierenden Anode (3),
einer auf Schwefel basierenden Kathode (4, 4b),
einem die Anode (3) und die Kathode (4) trennenden Separator (5, 5b), der durchlässig ist für Ionen des Metalls,
einem mit der Anode (3) in elektrischer Wirkverbindung stehenden Anodenableiter (7) und
einem mit der Kathode (4) in elektrischer Wirkverbindung stehenden Kathodenableiter (8),
**dadurch gekennzeichnet, dass**
der Separator (5, 5b), mindestens zweischichtig aufgebaut ist, umfassend
- eine der Kathode (4) zugewandten, Anionen blockierenden Schicht (25), die eine Ionen-Leitfähigkeit für die Ionen des Metalls hat, die mindestens 100-fach höher ist als die Ionen-Leitfähigkeit für ein Sₘ²⁻-Ion aus der Gruppe m = 2 bis 8, und
- eine für zumindest die Ionen des Metalls durchlässigen Polymerelektrolytschicht (26), die der Anode (3) zugewandt ist,
wobei der Separator (5, 5b) eine Dicke (d₂) von mindestens 10 µm hat und die Polymerelektrolytschicht (26) dicker als die der Kathode (4) zugewandte, Anionen blockierende Schicht (25) ist und eine Ionen-Leitfähigkeit für die Ionen des Metalls von mindestens 10⁻⁴ S/cm hat.

2. Batteriesystem nach Anspruch 1, **dadurch gekennzeichnet, dass** das Batteriesystem (1, 1 d) außerhalb des Schichtaufbaus ein Reservoir (11) aufweist, das mit einem Elektrolyt (6) gefüllt ist, in dem der Schwefel gelöst ist, und das mit der Kathode (4) und/oder dem Separator (5) verbunden/verbindbar ist, so dass der Elektrolyt (6) zwischen Reservoir (11) einerseits und Kathode (4) und/oder Separator (5) andererseits austauschbar ist.

3. Batteriesystem nach Anspruch 1 oder 2, **dadurch gekennzeichnet, dass** das Batteriesystem (1) kathodenseitig einen Elektrolyt (6) enthält, der mittels einer aktiven Umwälzung umwälzbar ist.

4. Batteriesystem nach Anspruch 2 oder 3, **dadurch gekennzeichnet, dass** das Batteriesystem (1, 1 d) für den Austausch des Elektrolyten (6) zwischen dem Reservoir (11) einerseits und der Kathode (4) und/oder dem Separator (5) andererseits eine Pumpe (12) aufweist.

5. Batteriesystem nach einem der vorhergehenden Ansprüche, **dadurch gekennzeichnet, dass** der Schwefel zu mindestens 50 % geschmolzen oder gelöst oder dispergiert vorliegt.

6. Batteriesystem nach einem der vorhergehenden Ansprüche, **dadurch gekennzeichnet, dass** der Schwefel zu mindestens 50 % anionisch vorliegt.

7. Batteriesystem nach einem der vorhergehenden Ansprüche, **dadurch gekennzeichnet, dass** der Separator (5) eine Dicke (d₂) zwischen 10 µm und 100 µm, insbesondere zwischen 13 µm und 60 µm hat.

8. Batteriesystem nach einem der vorhergehenden Ansprüche, **dadurch gekennzeichnet, dass** der Separator (5) mindestens zwei, insbesondere mindestens drei unmittelbar aufeinanderfolgende organische Schichten, insbesondere Polymerschichten aufweist.

9. Batteriesystem nach einem der vorhergehenden Ansprüche, **dadurch gekennzeichnet, dass** keine der mindestens zwei Schichten des Separators (5) eine anorganische Festkörperleiter-Schicht ist.

10. Batteriesystem nach einem der vorhergehenden Ansprüche, **dadurch gekennzeichnet, dass** als Metall mindestens eines aus der Gruppe Lithium, Natrium, Magnesium, Calcium, Aluminium, Zink eingesetzt ist.

11. Batteriesystem nach einem der vorhergehenden Ansprüche, **dadurch gekennzeichnet, dass** kathodenseitig ein offenporiger, insbesondere elektrisch leitfähiger Füllkörper (4f) angeordnet ist, in dessen Poren der Schwefel vorliegt.

12. Batteriesystem nach einem der vorhergehenden Ansprüche, **dadurch gekennzeichnet, dass** die zumindest für die Ionen des Metalls durchlässige Polymerelektrolytschicht (26) eine Ionen-Leitfähigkeit für die Ionen des Metalls bei 25°C von 10⁻³ S/cm oder besser aufweist.

## Claims

1. Metal-sulphur battery system (1, 1c, 1d) having at least one electrochemical metal-sulphur cell (2, 2b, 2c, 2d) having a layer structure made up of an anode (3) based on a metal,
a cathode (4, 4b) based on sulphur
a separator (5, 5b) which separates the anode (3) and the cathode (4) and is permeable to ions of the metal,
an anode power outlet lead (7) which is electrically connected to the anode (3)
and
a cathode power outlet lead (8) which is electrically connected to the cathode (4),
**characterized in that**
the separator (5, 5b) is made up of at least two layers and comprises
- an anion-blocking layer (25) which faces the cathode (4) and has an ionic conductivity for the ions of the metal which is at least 100 times the ionic conductivity for an Sₘ²⁻ ion from the group m = 2 to 8 and
- a polymer electrolyte layer (26) which is permeable to at least the ions of the metal and faces the anode (3),
where the separator (5, 5b) has a thickness (d₂) of at least 10 µm and the polymer electrolyte layer (26) is thicker than the anion-blocking layer (25) facing the cathode (4) and has an ionic conductivity for the ions of the metal of at least 10⁻⁴ S/cm.

2. Battery system according to Claim 1 **characterized in that** the battery system (1, 1d) has a reservoir (11) which is located outside the layer structure and is filled with an electrolyte (6) in which sulphur is dissolved and which is connected/connectable to the cathode (4) and/or the separator (5) so that the electrolyte (6) can be exchanged between reservoir (11) on the one hand and cathode (4) and/or separator (5) on the other hand.

3. Battery system according to Claim 1 or 2, **characterized in that** the battery system (1) contains an electrolyte (6) which is located on the cathode side and can be circulated by means of active circulation.

4. Battery system according to Claim 2 or 3, **characterized in that** the battery system (1, 1d) has a pump (12) for exchange of the electrolyte (6) between the reservoir (11) on the one hand and the cathode (4) and/or the separator (5) on the other hand.

5. Battery system according to any of the preceding claims, **characterized in that** the sulphur is molten or dissolved or dispersed to an extent of at least 50%.

6. Battery system according to any of the preceding claims, **characterized in that** the sulphur is present in anionic form to an extent of at least 50%.

7. Battery system according to any of the preceding claims, **characterized in that** the separator (5) has a thickness (d₂) in the range from 10 µm to 100 µm, in particular from 13 µm to 60 µm.

8. Battery system according to any of the preceding claims, **characterized in that** the separator (5) has at least two, in particular at least three, directly sequential organic layers, in particular polymer layers.

9. Battery system according to any of the preceding claims, **characterized in that** none of the at least two layers of the separator (5) is an inorganic solid-state conductor layer.

10. Battery system according to any of the preceding claims, **characterized in that** at least one metal from the group consisting of lithium, sodium, magnesium, calcium, aluminium, zinc is used as metal.

11. Battery system according to any of the preceding claims, **characterized in that** an open-pored, in particular electrically conductive, filler body (4f) in the pores of which the sulphur present is arranged on the cathode side.

12. Battery system according to any of the preceding claims, **characterized in that** the polymer electrolyte layer (26) which is permeable at least to the ions of the metal has an ionic conductivity for the ions of the metal at 25°C of 10⁻³ S/cm or better.

## Revendications

1. Système de batterie au métal-soufre (1, 1c, 1d), comprenant au moins
une cellule au métal-soufre (2, 2b, 2c, 2d) électrochimique qui présente une structure en couches constituée de
une anode (3) basée sur un métal,
une cathode (4, 4b) basée sur du soufre,
un séparateur (5, 5b) qui sépare l'anode (3) et la cathode (4), lequel est perméable aux ions du métal,
un conducteur de décharge d'anode (7) qui se trouve en liaison électrique active avec l'anode (3),
et
un conducteur de décharge de cathode (8) qui se trouve en liaison électrique active avec la cathode (4), **caractérisé en ce que**
le séparateur (5, 5b) est constitué d'au moins deux couches, comprenant
- une couche de blocage d'anions (25) qui fait face à la cathode (4), laquelle possède une conductivité ionique pour les ions du métal qui est au moins 100 fois supérieure à la conductivité ionique pour un ion de Sₘ²⁻ du groupe m = 2 à 8, et
- une couche d'électrolyte en polymère (26) perméable au moins aux ions du métal, laquelle fait face à l'anode (3),
le séparateur (5, 5b) ayant une épaisseur (d₂) d'au moins 10 µm et la couche d'électrolyte en polymère (26) étant plus épaisse que la couche de blocage d'anions (25) qui fait face à la cathode (4) et possédant une conductivité ionique pour les ions du métal d'au moins 10⁻⁴ S/cm.

2. Système de batterie selon la revendication 1, **caractérisé en ce que** le système de batterie (1, 1d) possède à l'extérieur de la structure en couches un réservoir (11) qui est rempli d'un électrolyte (6) dans lequel est dissout le soufre et qui est relié/peut être relié avec la cathode (4) et/ou le séparateur (5), de sorte que l'électrolyte (6) peut être échangé entre le réservoir (11) d'un côté et la cathode (4) et/ou le séparateur (5) de l'autre côté.

3. Système de batterie selon la revendication 1 ou 2, **caractérisé en ce que** le système de batterie (1) contient du côté de la cathode un électrolyte (6) au moyen duquel une circulation active peut être mise en circulation.

4. Système de batterie selon la revendication 2 ou 3, **caractérisé en ce que** le système de batterie (1, 1d) possède une pompe (12) pour l'échange de l'électrolyte (6) entre le réservoir (11) d'un côté et la cathode (4) et/ou le séparateur (5) de l'autre côté.

5. Système de batterie selon l'une des revendications précédentes, **caractérisé en ce que** le soufre est présent à au moins 50 % fondu ou dissout ou dispersé.

6. Système de batterie selon l'une des revendications précédentes, **caractérisé en ce que** le soufre est présent à au moins 50 % sous forme anionique.

7. Système de batterie selon l'une des revendications précédentes, **caractérisé en ce que** le séparateur (5) présente une épaisseur (d₂) entre 10 µm et 100 µm, notamment entre 13 µm et 60 µm.

8. Système de batterie selon l'une des revendications précédentes, **caractérisé en ce que** le séparateur (5) possède au moins deux, notamment au moins trois couches organiques qui se suivent directement, notamment des couches en polymère.

9. Système de batterie selon l'une des revendications précédentes, **caractérisé en ce qu'**aucune des au moins deux couches du séparateur (5) n'est une couche conductrice monolithique anorganique.

10. Système de batterie selon l'une des revendications précédentes, **caractérisé en ce que** le métal utilisé est au moins un métal du groupe lithium, sodium, magnésium, calcium, aluminium, zinc.

11. Système de batterie selon l'une des revendications précédentes, **caractérisé en ce qu'**un corps de remplissage (4f) à pores ouverts, notamment électriquement conducteur, dans les pores duquel se trouve du soufre est disposé du côté de la cathode.

12. Système de batterie selon l'une des revendications précédentes, **caractérisé en ce que** la couche d'électrolyte en polymère (26) perméable au moins aux ions du métal présente une conductivité ionique à 25 °C pour les ions du métal de 10⁻³ S/cm ou meilleure.
